# EUROPEAN PATENT APPLICATION

(11) **EP 4 672 526 A1**
(43) Date of publication of application: **31.12.2025**
(21) Application number: 24185396.9
(22) Date of filing: 28.06.2024
(51) Int. Cl.: H02G 3/32

(54) **SERVICE LINE MOUNTING DEVICE WITH PUSH-IN RATCHET**

(71) Applicant: HellermannTyton Limited, Crawley, West Sussex RH10 1DQ (GB)
(72) Inventor: CIPRIANI, Stefano, Wythenshawe, Manchester (GB)
(74) Representative: Hernandez, Yorck

(57) **Abstract**

The disclosure relates to a service line mounting device (1) with a main unit (2) and a sliding unit (3) where the main unit (2) and the sliding unit (3) are configured to delimit, in an assembled state, a through-opening (4) for one or more service lines, the main unit (2) has a first leg element (2a) and a second leg element (2b), with first and second leg element (2b) being connected by a base element (2c), and the sliding unit (3) is configured to slide along the first leg element (2a) and along the second leg element (2b) in order to adjust a size of the through-opening (4) in a transverse direction (TR), with the transverse direction (TR) running transverse to a through direction (TH) of the through-opening (4), wherein the base element (2c) comprises an attachment interface (2c') for attaching the base element (2c) to another structure, and both leg elements (2a, 2b) comprise a respective ratchet structure (2a', 2b') for a ratching interaction of the respective leg (2a, 2b) with corresponding ratchet counterparts (3a, 3b) of the sliding unit (3) so as to provide a space-saving solution for neatly arranging service lines (7) in a reliable way, preferably with improved maintenance options.

## Description

### Field of the invention

The disclosure relates to a service line mounting device with a main unit and a sliding unit where the main unit and the sliding unit are configured to delimit, in an assembled state, a through-opening for one or more service lines, the main unit has a first leg element and a second leg element, with first and second leg element being connected by a base element, and the sliding unit is configured to slide along the first leg element and along the second leg element in order to adjust a size of the through-opening in a transverse direction, with the transverse direction running transverse to a through direction of the through-opening.

### Background

Cable routing in many technical applications requires mounting of service lines, i.e. cables, cable conduits, tubes and the like, to an infrastructure element such as a machine housing or a building. To this end, cable channels and also individual clamps may be used, which are screwed to the infrastructure element. Examples for such a clamp is the HellermannTyton ratchet P-clamp, or the HellermannTyton High Voltage Cable Clamp.

Clamps may also be used not for individual mounting of the service lines, but for mounting several service lines running in parallel next to each other at the same time. One such example is the HellermannTyton Screwed Ratchet Clamp. There, one leg of a U-shaped base is fixed both at two ends at the infrastructure element, and a cap is slid onto the free end of the legs after the service lines are inserted into the clamp. In such a solution, the service lines are arranged next to each other.

Alternatively, rails as or similar to a Unistrut rail are used to mount service lines, usually when several service lines that run along each other have to be mounted. To attach the service lines to the rail, U-shape metal clamps such as the Phoenix Steel Cable Clamp are used to clamp one or two respective cables onto the rail. The metal clamps are hooked into the rail, in some embodiments similar to a quarter-turn fixing, and by tightenting a metal screw that presses the service lines against the rail, the clamp is also fixed in its position. In such a solution, cables may be arranged on top of each other.

The technical task, therefore, is to provide a space-saving solution for neatly arranging service lines in a reliable way, preferably with improved maintenance options.

### Overview

This task is solved by the objects of the independent claim. Advantageous embodiments will be apparent from the dependent claims, the description and the figures.

One aspect relates to a service line mounting device, SLMD, with a main unit and a sliding unit where main unit and sliding unit are configured to delimit, in an assembled state, a through-opening for one or more service lines. Service lines may be or comprise one or more cables, cable conduits, tubes and/or the like.

The main unit has a first leg element and a second leg element, with first and second leg element being connected by a base element in a first end region of the leg elements. In a second end region opposite to the first end region, the leg elements have respective free ends. The leg elements may extend equally or at least essentially equally in a direction away from the base element (the transverse direction, see below). The extension of the legs away from the base element (length) is larger than their distance from one another, preferably at least 2 times or at least 2,5 times larger. The main unit may be a single piece, i.e. the three elements refer to different part of the main unit which may be, e.g., injection-molded in a single injection step.

The sliding unit is configured to slide along the first leg element and along the second leg element in order to adjust a size of the through-opening in a transverse direction, with the transverse direction running transverse to a through direction of the through-opening. Thus, the limits of the through-opening are formed by the main unit and the sliding unit when sliding unit engages the leg elements simultaneously, i.e. when main unit and sliding unit are in the assembled state. The assembled state may also be referred to as closed state.

The base element comprises an attachment interface for attaching the base element to another structure, and both leg elements comprise a respective ratchet structure for a ratching interaction of the respective leg with corresponding ratchet counterparts of the sliding unit. This ratching interaction is configured to hinder loosening of the sliding unit, i.e. unintentional movement of the sliding unit away from the base element. The other structure may refer to an external structure such as a cable tray or a Unistrut rail. As explained below in more detail, the other structure may also be a foot structure for attachment to the base element via the attachment interface, where the foot structure comprises an additional mount such as a clip-in mount for mounting the SLMD onto the external structure, e.g. Unistrut rail.

This gives the advantage of a space-saving stacking of the service lines mainly transverse to a surface of the supporting external structure, i.e. the advantage of an elevated stacking of service lines. This combines with the advantages of a tool-free fixation of the service lines in the through-opening via the ratching interaction, as the sliding unit may simply be pressed towards the base element for adjusting the size of the through-opening, thus fixing one or more service lines in the through-opening. The proposed design with the spatially distributed ratching interaction that reduces local load peaks also enables an all plastic solution, where all units are made of plastic. This contributes to maintenance options as a 100% current-insulating SLMD is favorable in particular in case of electric malfunctioning. Furthermore, the space required in the transverse direction during installation and maintenance is reduced as compared to the U-shaped standard metal clamps, since no screw is required which a) would need to be accessed, and b) also protrudes far into the available space, thus blocking this space for service line routing. So with the proposed solution, more service lines can be stacked on one another with the same space requirements of the device in the transverse direction, which further saves space.

In one embodiment, it is provided that, in the through direction, the ratchet structures on each of the legs extends to less than 50% of the extension of the respective leg in the through direction, preferably less than 40%. Alternatively or in addition, the corresponding counterparts of the sliding unit (in particular with their related sliding unit sections, see below) extend, in the through direction, to less than 50% of the extension of the respective leg and/or the sliding unit in the through direction, preferably less than 40%. This allows a slimmer design of the SLMDs, thus contributes to space saving.

In a further embodiment, it is provided that, in the through direction, the ratchet structures of the different legs are offset with respect to each other. Alternatively or in addition, the corresponding counterparts of the sliding unit (in particular with their related sliding unit sections, see below) are offset with respect to each other in the through direction. Preferably, the offset is such that the respective ratchet structures and/or counterparts (in particular with their related sliding unit sections, see below) do not overlap in an orthogonal projection of the respective ratchet structures and/or counterparts onto a plane spanned by the through direction and the transverse direction. This contributes to a particularly tight arrangement of several SLMDs next to each other, so again saves space in many applications.

In another embodiment, it is provided that, in a cross-section transverse to the transverse direction, the ratchet structures of the different legs and/or the corresponding counterparts of the sliding unit (in particular with their related sliding unit sections, see below) are arranged point-symmetrically with respect to an axis running along the transverse direction. This allows to a particularly tight arrangement of several SLMDs next to each other, so again saves space in many applications.

In a further embodiment, it is provided that the ratchet counterparts of the sliding unit are arranged in respective sections of the sliding unit (the above related sliding unit section) which protrude, in a third direction, from a respective neighboring outer surface of the sliding unit, which neighboring outer surface is running transverse to the third direction. The third direction runs transverse to the transverse direction and the through direction. A width of the sliding unit measured in the third direction is at least essentially identical at the positions of the different ratchet counterparts of the sliding unit (and/or the different related sliding unit sections). This allows to adapt the sliding unit to the restraints in different sections of the sliding unit and at the same time ensure that multiple SLMDs can be arranged tightly in a row along the third direction. As a consequence, the space-saving character of the proposed SLMD is further enhanced.

In another embodiment, it is provided that, in the assembled state, the extension of the service line mounting device in the third direction is defined by the sliding unit. Thus, in the third direction, the main unit is smaller than the sliding unit. This also saves space and allows to arrange multiple SLMDs tightly in a row.

In a further embodiment, it is provided that the SLMD comprises a foot structure configured for attachment to or attached to the base element by means of the attachment interface. The attachment interface may be a snap-in interface. The foot structure may be a standardized foot structure and/or the snap-in interface a standardized interface used also for other service line mounting devices than the push-in SLMD for elevated stacking described here, e.g. for a hinge design SLMD for flat stacking of service lines.

The foot structure has a clip-in mount for mounting the SLMD to an external structure such as a Unistrut rail or a technically equivalent rail. The clip-in mount has an at least essentially rectangular cross-section hindering a rotation of the foot structure around an axis running along the transverse direction when mounted onto the external structure. Such a non-rotatable clip-in mount differs qualitatively from the established approaches such as quarter-turn fasteners. Both quarter-turn fasteners and the U-shaped metal clamps are per se rotatable in a rail, but rotation is hindered by excessive application force, which requires a tool and potentially damages the service line. The proposed design with the dimensions of the rectangular cross-section being adapted to an inner width of the external structure or rail thus also reduces the required forces, which fosters longevity and reliability as well as ease-of-maintenance.

A Unistrut rail may be understood as fastening rail with two parallel side walls with a base wall connecting the side walls, the side walls being flanged at their end edge remote from the base wall along the main direction of extension in order to allow hooking-in of respective individual mounting means such as the described SLMD via the foot structure.

In particular, the foot structure may be configured to be slidable along a guiding rail as external structure, in particular a Unistrut rail or a rail technically equivalent to a Unistrut rail, along a first direction, which is the main extension direction of the guiding rail. The attachment interface then is configured for attachment of the foot structure to the base element by sliding the base element onto the foot structure in a second direction, in particular via said snap-in interface. Preferably, the second direction is running transverse to the first direction. The clip-in mount may also have a clamping functionality hindering unintended sliding of the foot structure along the guiding rail, e.g. with one or two (releasable) wings that need to be pushed together for easy sliding. This is particularly useful for space-efficient installation and maintenance of a row of SLMDs on a guiding rail.

In one embodiment, it is provided that the ratching interaction of the sliding unit with the leg elements and/or the attaching interface of the base element and the foot structure and/or the clip-in mount of the foot structure is configured for a releasable fixation of the respective components on each other, in particular for a non-destructive tool-free release. This contributes to space-saving since no space needs to be left free for tools.

In a further embodiment, it is provided that the main unit and/or the sliding unit and/or the foot structure is made of plastic, in particular injection-mold, preferably as respective single piece units/structure. This not only gives the above-mentioned advantages with respect to current insulation, but also results in the possibility to release the SLMD in a destructive way, which might be a reasonable option in very tight environment. So again, space-saving and ease-of-maintenance is fostered.

The features and combinations of features described, including those of the general introduction, as well as the features and combinations of features disclosed in the figure description or in the figures alone, may be used not only alone or in the combination described, but also with other features or without some of the features disclosed, without departing from the scope of the invention. Consequently, embodiments are also part of the invention which are not explicitly shown and described in the figures, but which can be produced by separately combining the individual features disclosed in the figures. Therefore, embodiments and combinations of features which do not comprise all features of an originally formulated independent claim are also to be considered disclosed. Furthermore, embodiments and combinations of features are to be regarded as disclosed which deviate from or go beyond the combinations of features described in the dependencies of the claims.

In the context of the present disclosure, "transverse/along" may be understood as "at least substantially vertical/parallel", i.e. "vertical/parallel" or "substantially vertical/parallel", i.e. vertical/parallel except for a predetermined deviation. The predetermined deviation can, for example, be at most 15°, preferably at most 5°, particularly preferably at most 3°. Accordingly, "oppositely oriented" may be understood in the context of the present disclosure as "at least substantially oppositely oriented" i.e. "at least substantially antiparallel oriented". The limitation "substantially" may also refer to a percentage predetermined maximum permissible deviation, for example at most 15%, preferably at most 5%, particularly preferably at most 3%.

### Detailed description

Exemplary embodiments are described in more detail below with reference to schematic drawings. Therein show
- Fig. 1: an exemplary embodiment of a service line mounting device in an assembled state in a perspective view;
- Fig. 2: the embodiment of Fig. 1 in a side view;
- Fig. 3: an exemplary embodiment of a sliding unit in a perspective view;
- Fig. 4: a row of two sliding units of Fig. 3 in a top view;
- Fig. 5: an exemplary embodiment of a main unit in a side view;
- Fig. 6: the main unit of Fig. 5 with an exemplary sliding unit in a sectional view;
- Fig. 7: an exemplary embodiment of a foot structure in a perspective view;
- Fig. 8: the foot structure of Fig. 7 in a side view; and
- Fig. 9: an exemplary setup of service lines mounted on a Unistrut rail.

In the figures, the same or functionally identical features are provided with the same reference signs.

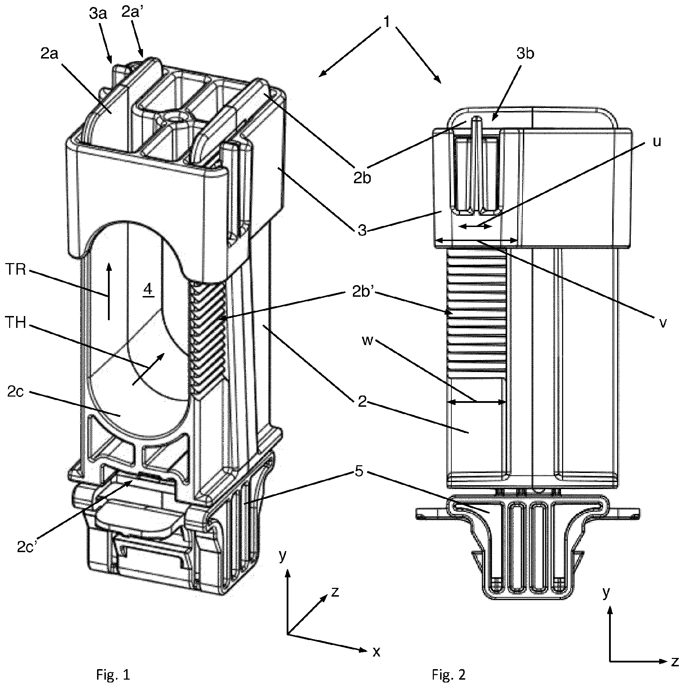

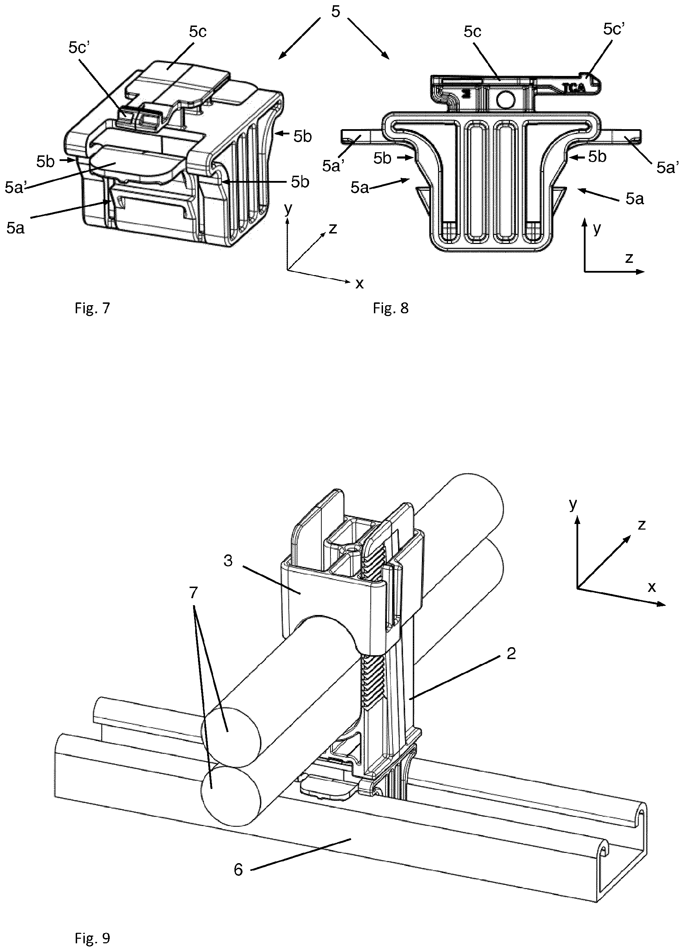

Fig. 1 shows an exemplary embodiment of a service line mounting device in an assembled state in a perspective view. The service line mounting device, SLMD, 1 comprises a main unit 2 and a sliding unit 3. The main unit 2 and the sliding unit 4 are configured to delimit, in the shown assembled or closed state, a through-opening 4 for one or more service lines 7 (Fig. 9). The main unit 2 has a first leg element 2a and a second leg element 2b, with first and second leg element 2a, 2b being connected by a base element 2c. The sliding unit 3 is configured to slide along the first leg element 2a and along the second leg element 2b in order to adjust a size of the through-opening 4 in a transverse direction TR (here y-direction), with the transverse direction TR running transverse to a through direction TH (here z-direction) of the through-opening 4.

Both leg elements 2a, 2b comprise a respective ratchet structure 2a', 2b' for a ratching interaction of the respective leg 2a, 2b with corresponding ratchet counterparts 3a, 3b of the sliding unit 3. Thus the sliding unit 3 engages with the legs 2a, 2b when pushed in the negative y-direction, the ratchet interaction hindering unintended opening of the SLMD 1. The ratchet structure 2a' is offset, in this example, with respect to ratchet structure 2b' in the through direction TH.

The base element 2c comprises an attachment interface 2c' for attaching the base element 2c to another structure, which is a foot structure 5 in the present example. The foot structure 5 will be explained in more detail in Figs. 7 and 8.

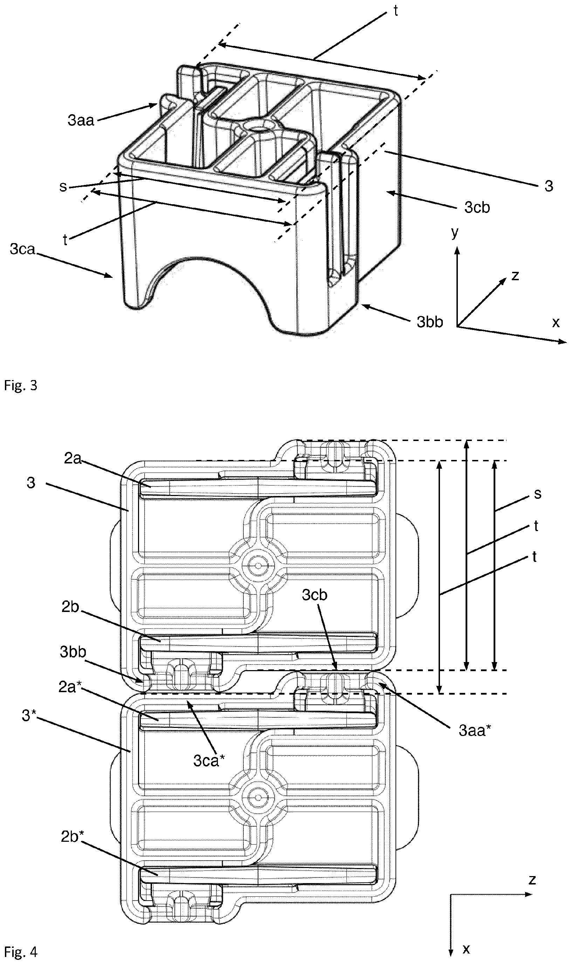

The width w, i.e. the extension in the through direction TH, of the ratchet structures 2a', 2b' is about 1/3 of the width of the legs 2a, 2b in this example, i.e. less than 40% here. Similarly, the width u of the corresponding ratchet counterparts 3a, 3b and the width v of sliding unit sections 3aa, 3bb (Fig. 3) related to the counterparts 3a, 3b is less than 50% of the extension of the legs 2a, 2b in the through direction TH here. Width u may be smaller than width w, and/or width w may be smaller than width v.

Fig. 3 shows an exemplary embodiment of a sliding unit in a perspective view. The ratchet counterparts 3a, 3b of the sliding unit 3 are arranged in respective sections 3aa, 3bb of the sliding unit 3 which protrude, in a third direction (the x-direction here), from a respective neighboring outer surface 3ca, 3cb of the sliding unit 3. This neighboring outer surfaces 3ca, 3cb are running transverse to the third direction, i.e. extends along through direction TH and transverse direction TR. A width t of the sliding unit 3 measured in the third direction is at least essentially identical at the positions of the different ratchet counterparts 3a, 3b and/or the positions of the different sections 3aa, 3bb of the sliding unit 3.

In the present example, the extension of the SLMD 1 in the third direction (x-direction here) is given by the extension of the sliding unit 3. Thus, the extension is the width t at almost any position (e.g. >90% or >95% of all possible positions), and the total extension of the sliding unit 3 and thus the SLMD 1 is (2*t)-(overlap s). In addition, the layout of the sliding unit 3 corresponding to the arrangement of the ratchet structures 2a', 2b' is point-symmetric with regards to an axis running along the transverse direction here.

Fig. 4 shows the benefit of the described layout with a row of two sliding units in a top view. Since neighboring sliding units 3, 3* have offset counterparts 3a, 3b, the sliding units 3, 3* are in mechanical contact with each other in two areas, i.e. the section 3bb of one sliding unit 3 abuts the outer surface 3ca* of the other sliding unit 3*, and the section 3aa* of the other sliding unit 3* abuts the outer surface 3cb of the one sliding unit 3. This enhances also the stability of the row as a whole, in particular against torsional forces about the z-axis. Such torsional forces frequently occur in many settings especially by service lines 7 bent in the x-z-plane. So the design shown here not only saves space in the x-direction while maintaining a maximum stability of the individual sliding units 3 / SLMDs 1, but also improves overall stability of a row of SLMDs 1. During installation, the SLMDs 1 may be slid along a guiding rail 6 (Fig. 9) until they abut each other; during maintenance, they may be slid along the guiding rail 6 apart from each other for improved accessability.

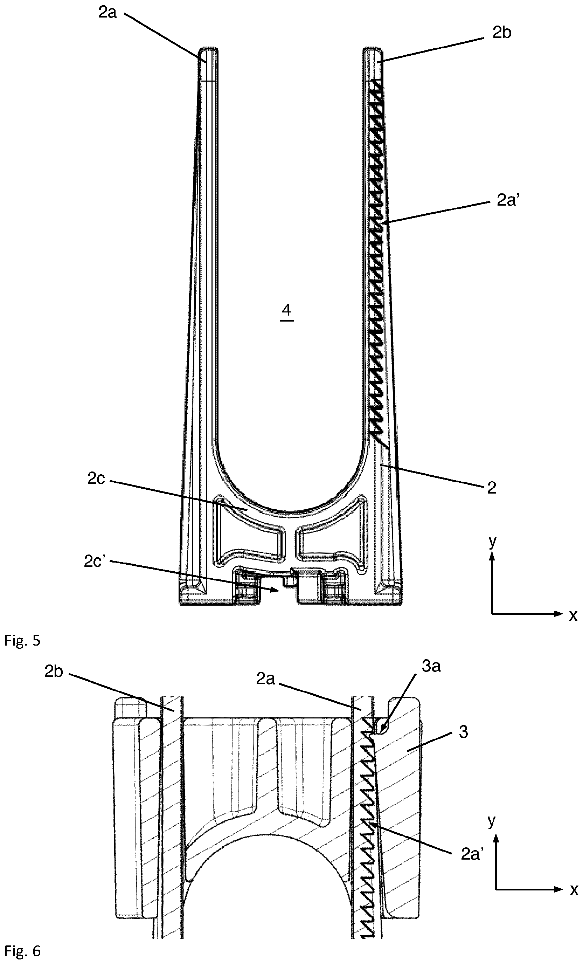

Fig. 5 shows an exemplary embodiment of a main unit in a side view. The leg elements 2a, 2b and the base element 2c form, like a U-shape, three sides of the through-opening 4. The length (extension in the y-direction here) of the ratchet structure 2a' allows the use of this embodiment for up to three service lines 7 (of maximal diameter, i.e. of a diameter corresponding to the width of the through-opening in the x-direction). Opposed to the known metal clamps using screws to secure the service lines 7, though, the space requirement of the SLMD 1 in the transverse direction (y-direction here) is independent of the number of service lines 7 mounted, saving space at least for the case of many service lines 7.

The attachment interface 2c' is configured as a snap-in interface with a snap-in direction running along the through direction, as apparent with reference to Figs. 7 and 8 in more detail. Fig. 6 shows another detail of the main unit of Fig. 5 with an exemplary sliding unit in a sectional view. The ratchet structure 2a' interacts with the counterpart 3a, allowing a tool-free adjustment of the size (in the transverse direction) of the through-opening 4.

Figs. 7 and 8 show an exemplary embodiment of a foot structure in a perspective view and side view, respectively. It has a clip-in mount 5a with an at least essentially rectangular cross-section which is configured for a mechanical contact with a guiding rail 6 such as a Unistrut rail at several (here four) edge positions 5b. By this mechanical contact, the rectangular cross-section hinders the rotation of the foot structure 5 about the y-axis once it is clipped in said guidance rail. The clip-in mount 5a also comprises respective wing elements 5a' for tool-free release of the clip-in mount 5a. Also, the wing elements 5a' enable the free sliding of the foot structure 5 along said guiding rail 6 in the x-direction in this example.

The foot structure 5 is configured for attachment to the base element 2c by means of the attachment interface 2c'. To this end, it comprises itself a corresponding snap-in element 5c with a release wing 5c'. The snap-in element 5c is slid into the attachment interface 2y' in the z-direction here, i.e. transverse to the main extension direction of a guidance rail (along which the foot structure may be slid in this example.

Fig. 9 shows an exemplary setup of service lines mounted on a Unistrut rail as guiding rail. The foot structure 5 is clipped into the guiding rail 6 in order to mount the service lines 7. The foot structure 5 may be moved along the main extension direction of the guiding rail 6 (here the x-direction) during installation and maintenance. The sliding unit 3 may be "pushed in" towards the guiding rail 6 to fix the service lines 7 in a given position. Tools are not required.

The proposed solution provides a space-saving, easy-to-maintain service line mounting device where a focus is on an elevated stacking of the service lines, i.e. a stacking the service lines mainly transverse to a surface of a supporting external structure. In a sister application, an alternative solution for a space-saving, easy-to-maintain service line mounting device is provided where a focus is on a flat stacking of the service lines, i.e. a stacking the service lines mainly along a surface of a supporting external structure. Both types of service line mounting device may rely on identical foot structures for attaching the devices to Unistrut rails, providing a versatile service line mounting system of solutions for a plethora of different applications.

## Claims

1. Service line mounting device (1) with a main unit (2) and a sliding unit (3) where
- the main unit (2) and the sliding unit (3) are configured to delimit, in an assembled state, a through-opening (4) for one or more service lines,
- the main unit (2) has a first leg element (2a) and a second leg element (2b), with first and second leg element (2b) being connected by a base element (2c), and
- the sliding unit (3) is configured to slide along the first leg element (2a) and along the second leg element (2b) in order to adjust a size of the through-opening (4) in a transverse direction (TR), with the transverse direction (TR) running transverse to a through direction (TH) of the through-opening (4),
**characterized in that**
- the base element (2c) comprises an attachment interface (2c') for attaching the base element (2c) to another structure, and
- both leg elements (2a, 2b) comprise a respective ratchet structure (2a', 2b') for a ratching interaction of the respective leg (2a, 2b) with corresponding ratchet counterparts (3a, 3b) of the sliding unit (3).

2. Service line mounting device (1) according to the preceding claim,
**characterized in that**,
in the through direction (TH), the ratchet structures (2a', 2b') on each of the leg elements (2a, 2b) extends to less than 50% of the respective leg element (2a, 2b), preferably less than 40%.

3. Service line mounting device (1) according to any one of the preceding claims,
**characterized in that**,
in the through direction (TH), the ratchet structures (2a', 2b') of the different leg elements (2a, 2b) are offset with respect to each other.

4. Service line mounting device (1) according to any one of the preceding claims,
**characterized in that**,
in a cross-section transverse to the transverse direction (TR), the ratchet structures (2a', 2b') of the different leg elements (2a, 2b) are arranged point-symmetrically with respect to an axis running along the transverse direction (TR).

5. Service line mounting device (1) according to any one of the preceding claims, **characterized in that**
- the ratchet counterparts (3a, 3b) of the sliding unit (3) are arranged in respective sections (3aa, 3bb) of the sliding unit (3) which protrude, in a third direction, from a neighboring outer surface (3ca, 3cb) of the sliding unit (3), which neighboring outer surfaces (3ca, 3cb) are running transverse to the third direction, where
- the third direction runs transverse to the transverse direction (TR) and the through direction (TH), and
- a width (t) of the sliding unit (3) measured in the third direction is at least essentially identical at the positions of the different ratchet counterparts (3a, 3b) of the sliding unit (3).

6. Service line mounting device (1) according to any one of the preceding claims,
**characterized in that**,
in the assembled state, the extension of the service line mounting device (1) in the third direction is defined by the sliding unit (3).

7. Service line mounting device (1) according to any one of the preceding claims, with
- a foot structure (5) configured for attachment to or attached to the base element (2c) by means of the attachment interface (2c'), where
- the foot structure (5) has a clip-in mount (5a) with an at least essentially rectangular cross-section hindering a rotation of the foot structure (5) around an axis running along the transverse direction (TR).

8. Service line mounting device (1) according to the preceding claim,
**characterized in that**
- the foot structure (5) is configured to be slidable along a guiding rail (6), in particular a Unistrut rail or a rail technically equivalent to a Unistrut rail, along a first direction, and
- the attachment interface (2c') is configured for attachment of the foot structure (5) to the base element (2c) by sliding the base element (2c) onto the foot structure (5) in a second direction, the second direction running transverse to the first direction.

9. Service line mounting device (1) according to any one of the preceding claims, **characterized in that**
- the ratching interaction of the sliding unit (3) with the leg elements (2a, 2b) and/or
- the attachment interface (2c') of the base element (2c) and the foot structure (5) and/or
- the clip-in mount (5a) of the foot structure (5)
is configured for a releasable fixation, in particular for a tool-free release.

10. Service line mounting device (1) according to any one of the preceding claims, **characterized in that**
the main unit (2) and/or the sliding unit (3) and/or the foot structure (5) is made of plastic, in particular injection-mold.
